# EUROPEAN PATENT APPLICATION

(11) **EP 4 682 804 A1**
(43) Date of publication of application: **21.01.2026**
(21) Application number: 24188831.2
(22) Date of filing: 16.07.2024
(51) Int. Cl.: G06Q 20/40

(54) **BUILDING DATA TREES FOR PAYMENT NETWORK THREAT DETECTION**

(71) Applicant: Mastercard International Incorporated, Purchase, NY 10577 (US)
(72) Inventor: Vitzthum, Wolfgang, London, N6 4RT (GB); Davies, Bailey Jack, Harpenden, AL5 5PS (GB)
(74) Representative: Barker Brettell LLP

(57) **Abstract**

The present invention relates to a computer implemented method of generating a data tree 240 for use with a threat detection algorithm 155 configured to detect threats in a payment network 110. The method comprises receiving, and storing in a data tree 240, first transaction data 220 comprising details of a source account 221 and details of a destination account 222 of a first transaction 220. At a later point in time, second transaction data 230 comprising details of a source account 231 and details of a destination account 232 of a second transaction is received. It is determined whether the destination account 232 of the second transaction is the same account as the source account 221 of the first transaction, and if so the source account 231 of the second transaction as stored as a parent node to the first transaction data 220 in the data tree 240. The method further comprises inputting, into a threat detection algorithm 155, the data tree 240.

## Description

### Field

The present invention relates to methods and systems of generating a data tree for use with threat detection algorithms configured to detect threats in a payment network. In particular, the method and systems allow for data trees comprising transaction data to be built and stored for input into the threat detection algorithms.

### Background

Payment network providers often employ threat detection algorithms to detect potential threats within the payment networks they maintain. In order to accurately detect threats within the payment network, the threat detection algorithms require large amounts of precise data to use for outputting their predictions.

Existing threat detection algorithms currently use data trees, otherwise known as dispersion networks, to detect potential malicious transactions and actors in payment networks. The data trees consist of a network of transactions occurring between many different source and destination accounts.

Transaction data trees are traditionally built from a linear time ordered stream of received transaction data, i.e., they are built based on the time in which data relating to transactions is received and processed by the payment network. This can heavily limit the ability of payment network systems to ingest large volumes of transactions and prevents the payment network systems from processing the transactions and creating the data trees at a high rate. Payment networks building data trees dependent upon when they receive the transaction data further prevents the payment network from being able to scale up the generation and building of the data tree networks in a distributed manner.

Current methods of storing the transaction data for building the data trees includes using Structured Query Language (SQL) databases with complex queries. Using data from databases such as SQL databases to generate data trees can be costly in terms of time and computational resources, as the entire database is used to generate the data trees.

The present invention sets out to alleviate these problems and inefficiencies relating to generating data trees comprising transaction data for uses in detecting threats in a payment network.

### Summary of Invention

According to an aspect there is provided a computer implemented method of generating a data tree for use with a threat detection algorithm configured to detect threats in a payment network, the method comprising: receiving first transaction data relating to a first transaction, wherein the first transaction data comprises details of a source account and details of a destination account of the first transaction; storing the details of the source account of the first transaction as a first node in a data tree; receiving, at a later point in time to receiving the first transaction data, second transaction data relating to a second transaction, wherein the second transaction data comprises details of a source account and details of a destination account of the second transaction; determining whether the destination account of the second transaction is the same account as the source account of the first transaction; storing, if the destination account of the second transaction is the same as the source account of the first transaction, the details of the source account of the second transaction as a second node in the data tree, wherein the second node is stored as a parent node in the data tree, such that the first node is a child node deriving from the second node; inputting, into a threat detection algorithm, the data tree comprising the first node and the second node.

Advantageously, this allows for the data tree to be grown in a backwards direction. The second transaction is received after the first transaction, however given as the destination account for the second transaction is checked against the source account of the first transaction (i.e., it is determined if they are the same account) it is possible for the second transaction to be stored in the data tree as a second node before the first node which has already been stored. The second node is stored as a parent node to the first transaction. This allows for un-ordered transaction data to still be stored in the correct sequence within the data tree. Thus, a large and complex data tree can be built from the transaction data received, rather than having to generate different data trees for each un-ordered transaction received. Large volumes of data are therefore able to be processed at a high rate, whilst also generating complex and extensive data trees for input into the threat detection algorithm. In this way, this further improves the output of the threat detection algorithm, i.e., the detection of any threats due to the improved input.

The data tree is a data structure comprising a network of nodes connected together by edges. The nodes may represent the source and destination accounts of the first and second transactions, and the edges may represent the first and second transactions themselves between the source and destination accounts. The data tree may be a hierarchal data tree structure.

The source account of a transaction is an account in which the funds associated with the transaction are sent from (i.e., originate from with regard to that transaction). The destination account of a transaction is an account in which the funds associated with the transaction are sent (i.e., received at as a result of the transaction). Of course, the source account of the first transaction is a different account to the destination account of the first transaction, and the source account of the second transaction is different to the destination account of the second transaction.

The method comprises inputting, into the threat detection algorithm, the data tree comprising the first node and the second node, such that the threat detection algorithm may be used to determine threats. The threat detection algorithm may be a machine learning model. The threat detection algorithm may be a money laundering detection algorithm. In other arrangements, the threat detection algorithm may be any type of network security threat detection algorithm, and/or a fraud detection algorithm. The computer implemented method may be used with any type of threat detection algorithm.

Preferably, the data tree may comprise an edge connecting the second node to the first node, the edge representing the second transaction. In this way, the data tree comprises the first node representing the source account of the first transaction (the same as the destination account for the second transaction), the second node representing the source account of the second transaction and an edge linking the first node to the second node representing the second transaction.

Preferably, the first transaction data may further comprise data indicating a time that the first transaction occurred, the transaction data of the second transaction may further comprise data indicating a time that the second transaction occurred, and the method may further comprise: determining, whether the time of the first transaction is before the time of the second transaction; and wherein the step of storing the details of the source account of the second transaction as the second node in the data tree wherein the second node is stored as the parent node in the data tree such that the first node is the child node deriving from the second node is carried out only if: the destination account of the second transaction is the same as the source account of the first transaction and if the time of the second transaction is before the time of the first transaction.

Advantageously, this provides a method in which transaction data for a transaction which occurred before an already received and stored transaction is stored in the same data tree as the previously stored transaction. In this way, the data tree can grow with new data in a backwards time direction, i.e., transactions that occurred before the transaction(s) already stored in the data tree can be added to the same data tree, rather than having to be stored in a separate new data tree. This allows for complex data trees of transactions to be generated where the building of the data tree is not dependent upon the order in which the transaction data is received.

Preferably, the method may further comprise storing the details of the destination account of the first transaction as a third node in the data tree, wherein the third node is stored as a child node deriving from the first node in the data tree, such that the first node is a parent node to the third node. In this way, the first transaction is stored within the data tree, such that the data tree therefore comprises a network of transactions between the source account of the second transaction to the destination account of the second transaction (same as the source account of the first transaction) to the destination account of the first transaction.

Preferably, the data tree may comprise an edge connecting the first node to the third node, the edge connecting the first node to the third node representing the first transaction. In this way, the data tree comprises the first node representing the source account of the first transaction (the same as the destination account for the second transaction), the third node representing the destination account of the first transaction, and an edge linking the first node to the third node representing the first transaction.

The method may further comprise inputting, into the threat detection algorithm, the data tree comprising the first node, the second node and the third node. This allows for the threat detection algorithm to be inputted with a data tree consisting of the network of transactions between the accounts of the first and second transactions. This will improve the outputs generated by the threat detection algorithm, given that complex and large networks of data are able to be inputted into the algorithm.

Preferably, the method may further comprise determining whether the source account of the second transaction is the same account as the destination account of the first transaction; and storing, if the source account of the second transaction is the same as the destination account of the first transaction, the details of the destination account of the second transaction as a second node in the data tree, wherein the second node is stored as a child node deriving from the third node in the data tree, such that the third node is a parent node to the second node. In this way, the method allows for determining whether the second transaction details should be stored before or after the first transaction details in the data tree. It is determined whether the destination account of the second transaction is the same account as the source account of the first transaction and should therefore be stored before the first node and first transaction details in the data tree, or whether the source account of the second transaction is the same account as the destination account of the first transaction and should therefore be stored after the third node and first transaction data in the data tree. In this way, new data (e.g., the second transaction data) is able to be processed and incorporated into the data tree in either direction, i.e., either as a parent node to the nodes already in the data tree or as a child node to the nodes already in the data tree. This allows for un-ordered transactions to be received and stored within the data tree to build the network of data in both directions within data tree.

If the destination account of the second transaction is the same account as the source account of the first transaction, the details of the source account of the second transaction are stored as the second node in the data tree as a parent node. However, if instead the source account of the second transaction is the same account as the destination account of the first transaction, the details of the destination account of the second transaction are stored as the second node in the data tree as a child node.

Preferably, the first transaction data may further comprise data indicating a time that the first transaction occurred, the transaction data of the second transaction may further comprise data indicating a time that the second transaction occurred, and the method may further comprise: determining, whether the time of the first transaction is after the time of the second transaction; and wherein the step of storing the details of the destination account of the second transaction as the second node in the data tree wherein the second node is stored as the child node deriving from the third node in the data tree such that the third node is a parent node to the second node is carried out only if the source account of the second transaction is the same as the destination account of the first transaction and if the time of the second transaction is after the time of the first transaction. This provides a method in which transaction data for a transaction which occurred after (i.e., at a time later than) an already received and stored transaction is stored in the same data tree as the previously stored transaction. In this way, the data tree can grow with new data in a forward time direction, i.e., transactions that occurred after the transaction(s) already stored in the data tree can be added to the same data tree, rather than having to be stored in a separate new data tree. This allows for complex data trees to be generated that include edges and nodes, as the network of transaction that have occurred and that are stored within the tree is extensive.

The method may further comprise determining whether the source account of the second transaction is the same account as the source account of the first transaction; and storing, if the source account of the second transaction is the same as the source account of the first transaction, the details of the destination account of the second transaction as the second node in the data tree, wherein the second node is stored as a child node deriving from the first node in the data tree, such that the first node is a parent node to the second node.

In this way, the destination account of the second transaction is added to the data tree deriving from the (first) node representing the same source account as the source account of the first transaction. This allows for further data relating to the second transaction to be stored within the data tree, connected by the fact that the first and second transactions have the same source account.

The method may further comprise determining whether the destination account of the second transaction is the same account as the destination account of the first transaction; and storing, if the destination account of the second transaction is the same as the destination account of the first transaction, the details of the source account of the second transaction as the second node in the data tree, wherein the second node is stored as a parent node to the third node, such that the third node is a child node deriving from the second node. In this way, the source account of the second transaction is added to the data tree as a parent node to the third node representing the same destination account as the destination account of the first transaction. This allows for further data relating to the second transaction to be stored within the data tree, connected by the fact that the first and second transactions have the same destination account.

Preferably, the method may further comprise: determining whether the source account of the second transaction is the same account as the destination account of the first transaction; and storing, if the destination account of the second transaction is not the same account as the source account of the first transaction and if the source account of the second transaction is not the same as the destination account of the first transaction, the details of the source account of the second transaction as a first node in a further data tree and the details of the destination account of the second transaction as a second node deriving from the first node in the further data tree. Advantageously, this allows for the received second transaction data to still be stored within a data tree even if corresponding source or destination accounts have not been previously stored. The method may further comprise inputting, into a threat detection algorithm, the further data tree.

The method may further comprise storing, if the source account of the second transaction is not the same account as the source account of the first transaction, the details of the source account of the second transaction as a first node in a further data tree and the details of the destination account of the second transaction as a second node deriving from the first node in the further data tree.

Preferably, the first transaction data may comprise a source account ID corresponding to the details of the source account of the first transaction, the second transaction data may comprise a destination account ID corresponding to the details of the destination account of the second transaction, and determining whether the destination account of the second transaction is the same account as the source account of the first transaction may comprise determining whether the destination account ID of the second transaction is the same as the source account ID of the first transaction.

In this way, an account ID for each of the accounts involved in the first and second transactions is stored, such that the determining of whether an account is the same as another account includes determining if the account IDs are the same. This increases the efficiency of the determination step as well as making searching through a database that stores the details of the accounts less time consuming.

The source account ID of the first transaction may be a first source account ID. The destination account ID of the second transaction may be a second destination account ID. The first transaction data may comprise a first destination account ID corresponding to the details of the destination account of the first transaction, and the second transaction data may comprise a second source account ID corresponding to the details of the source account of the second transaction.

Determining whether the source account of the second transaction is the same account as the destination account of the first transaction may comprise determining whether the second source account ID of the second transaction is the same as the first destination account ID of the first transaction. Determining whether the source account of the second transaction is the same account as the source account of the first transaction may comprise determining whether the second source account ID of the second transaction is the same as the first source account ID of the first transaction. Determining whether the destination account of the second transaction is the same account as the destination account of the first transaction may comprise determining whether the second destination account ID of the second transaction is the same as the first destination account ID of the first transaction.

Preferably, the method may further comprise: storing a data tree ID corresponding to the data tree; assigning the data tree ID to the details of the source account and the details of the destination account of the first transaction data; and determining, if the destination account of the second transaction is the same as the source account of the first transaction, the data tree ID assigned to the source account of the first transaction; and storing, the source account of the second transaction as the second node in the data tree assigned with the data tree ID. In this way, the data tree in which the first transaction data is stored within can easily be found within a database by searching for the associated data tree ID. Therefore, as the second transaction is received, after determining whether the second transaction destination account matches the first transaction source account, the correct tree can be found by using the assigned tree ID. The second node may then be stored in the correct data tree in which the first transaction is stored.

The method may further comprise determining, if the source account of the second transaction is the same as the destination account of the first transaction, the data tree ID assigned to the destination account of the first transaction (which is the same as the data tree ID assigned to the source account of the first transaction). The method may also further comprise storing the destination account of the second transaction as the second node in the data tree assigned with the data tree ID.

Preferably, the first transaction data and the second transaction data may be stored in a cache.

Preferably, the first transaction data may be stored for a predetermined period of time, and the storing, if the destination account of the second transaction is the same as the source account of the first transaction, the details of the source account of the second transaction as a second node in the data tree, may only be carried out if the second transaction data is received within the predetermined period of time.

Advantageously, any subsequently received transaction data and account data (i.e., the second transaction data) are only stored in the same data tree as the first transaction data within a predetermined amount of time. This ensures that the second transaction data is still relevant to the network of transaction that occurred in the data tree comprising the first transaction data. Otherwise, the second transaction data may no longer be relevant to the first transaction, if it occurred much later than the first transaction, and will therefore be stored in a new data tree.

The step of storing, if the source account of the second transaction is the same as the destination account of the first transaction, the details of the destination account of the second transaction as a second node in the data tree, wherein the second node is stored as a child node deriving from the third node in the data tree, such that the third node is a parent node to the second node, may only carried out if the second transaction data is received within the predetermined period of time.

The step of storing, if the source account of the second transaction is the same as the source account of the first transaction, the details of the destination account of the second transaction as the second node in the data tree, wherein the second node is stored as a child node deriving from the first node in the data tree, such that the first node is a parent node to the second node, may only carried out if the second transaction data is received within the predetermined period of time.

Preferably, the method may further comprise detecting a threat using the threat detection algorithm after the data tree has been input into the threat detection algorithm. Advantageously, this allows for the data within the data tree to be used to detect threats with the threat detection algorithm. As the improved and more complex data tree is input into the threat detection algorithm, the threat detection algorithm may detect additional threats based on the more complex relationships shown within the data tree.

According to a further aspect there is provided a system for use with a threat detection algorithm configured to detect threats in a payment network, the system configured to: receive first transaction data relating to a first transaction, wherein the first transaction data comprises details of a source account and details of a destination account of the first transaction; store the details of the source account of the first transaction as a first node in a data tree; receive, at a later point in time to receiving the first transaction data, second transaction data relating to a second transaction, wherein the second transaction data comprises details of a source account and details of a destination account of the second transaction; determine whether the destination account of the second transaction is the same account as the source account of the first transaction; store, if the destination account of the second transaction is the same as the source account of the first transaction, the details of the source account of the second transaction as a second node in the data tree, wherein the second node is stored as a parent node in the data tree, such that the first node is a child node deriving from the second node; and input, into a threat detection algorithm, the data tree comprising the first node and the second node.

The system may be configured to perform any of the above-mentioned method steps according to the above aspects of the invention.

According to a further aspect there is provided a non-transitory computer-readable medium comprising instructions which, when executed by a computer, cause the computer to receive first transaction data relating to a first transaction, wherein the first transaction data comprises details of a source account and details of a destination account of the first transaction; store the details of the source account of the first transaction as a first node in a data tree; receive, at a later point in time to receiving the first transaction data, second transaction data relating to a second transaction, wherein the second transaction data comprises details of a source account and details of a destination account of the second transaction; determine whether the destination account of the second transaction is the same account as the source account of the first transaction; store, if the destination account of the second transaction is the same as the source account of the first transaction, the details of the source account of the second transaction as a second node in the data tree, wherein the second node is stored as a parent node in the data tree, such that the first node is a child node deriving from the second node; and input, into a threat detection algorithm, the data tree comprising the first node and the second node.

The non-transitory computer-readable medium may comprise instructions which, when executed by a computer, cause the computer to perform any of the above-mentioned method steps according to the above aspects of the invention.

According to a further aspect of the invention, there is provided a computer program product comprising instructions which, when executed by a computer, cause the computer to: receive first transaction data relating to a first transaction, wherein the first transaction data comprises details of a source account and details of a destination account of the first transaction; store the details of the source account of the first transaction as a first node in a data tree; receive, at a later point in time to receiving the first transaction data, second transaction data relating to a second transaction, wherein the second transaction data comprises details of a source account and details of a destination account of the second transaction; determine whether the destination account of the second transaction is the same account as the source account of the first transaction; store, if the destination account of the second transaction is the same as the source account of the first transaction, the details of the source account of the second transaction as a second node in the data tree, wherein the second node is stored as a parent node in the data tree, such that the first node is a child node deriving from the second node; and input, into a threat detection algorithm, the data tree comprising the first node and the second node.

The computer program product may comprise instructions which, when executed by a computer, cause the computer to perform any of the above-mentioned method steps according to the above aspects of the invention.

### Description of Figures

Figure 1 shows a schematic diagram of a communication system according to the present disclosure;
Figure 2 shows a schematic diagram showing a process of generating a data tree within the system of Figure 1;
Figure 3 shows a schematic diagram showing a process of generating a data tree within the system of Figure 1;
Figure 4 shows a method sequence diagram of generating a data tree, as shown in Figures 2 and 3, for use with a threat detection algorithm;
Figure 5 shows a message flow diagram between the entities of the system shown in Figure 1 to generate a data tree, as shown in Figure 2, for use with a threat detection algorithm;
Figure 6 shows a message flow diagram between the entities of the system shown in Figure 1 to generate a data tree, as shown in Figure 3, for use with a threat detection algorithm;
Figure 7 shows an example data tree, generated through the processes shown in Figures 2 to 6, within the system of Figure 1 for use with a threat detection algorithm;
Figure 8 shows method steps of a computer implemented method of generating a data tree for use with a threat detection algorithm configured to detect threats in a payment network; and
Figure 9 shows a data processing device, according to the present disclosure.

### Detailed Description

The present disclosure relates to methods and systems generating a data tree for use with a threat detection algorithm configured to detect threats in a payment network. The methods and systems allow data trees to be generated in a way that is not dependent on the sequence in which the transactions are ingested, such that complex data trees are built based on the received transactions. This provides better data for input into threat detection algorithms thereby improving the detection and/or prediction of any threats.

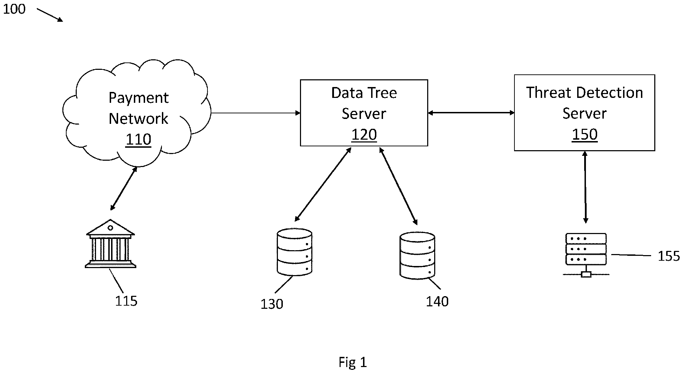

Figure 1 shows a schematic diagram of a communication system 100. The system 100 includes a payment network 110. The payment network 110 is maintained by a payment network provider. Alternatively, the communication network 110 may be maintained by another entity, external to the payment network provider. The payment network provider may be any payment network provider such as Mastercard^{®}, for instance. However, it would be understood that the system 100 is applicable with any type of payment network provider.

The payment network 110 connects entities 115 engaging in financial transactions. The entities 115 connected through the payment network 110 includes financial institutions such as acquirer and issuer banks, credit unions, cryptocurrency providers and any other entity engaging in a financial transaction. The payment network 110 is used by the entities to engage in financial transactions, where funds are sent from one account to another account via the payment network 110. The payment network 110 may be a credit card network, an electronic-funds-transfer network, a peer-to-peer payment network or ATM networks. However, it would be understood that the system 100 is applicable with any type of payment network 110. Through monitoring the transactions that occur across the network payment 110, the payment network provider is able to access data relating to the transactions.

The communication system 100 includes a data tree server 120 and a threat detection server 150. The data tree server 120 is in communication with the payment network 110 and the threat detection server 150. The threat detection server 150 is in communication with the data tree server 120. Both the data tree server 120 and the threat detection server 150 are maintained by the payment network provider but need not necessarily be so and in other arrangements one or both of the data tree server 120 and the threat detection server 150 may be maintained by another party.

The threat detection server 150 maintains and stores a machine learning model. The machine learning model is a threat detection algorithm 155. The threat detection algorithm 155 is configured to detect threats in the payment network 110. The threat detection algorithm is input with data retrieved from the payment network 110 in order to detect threats in the payment network 110. The threat detection algorithm 115 is a money laundering detection algorithm, such that the threat detection algorithm is configured to detect accounts using the payment network 110 that are engaging in money laundering activities.

The data tree server 120 maintains a tree database 140 and a cache 130. As will be discussed in further detail below, the data tree server 120 receives transaction data from the payment network 110 and stores, in the tree database 140, data trees generated from the received transaction data. The cache 130 is used to store details of accounts involved in the received transaction data. The data tree server 120 is then configured to provide the generated data trees stored within the tree databases 140 to the threat detection server 150.

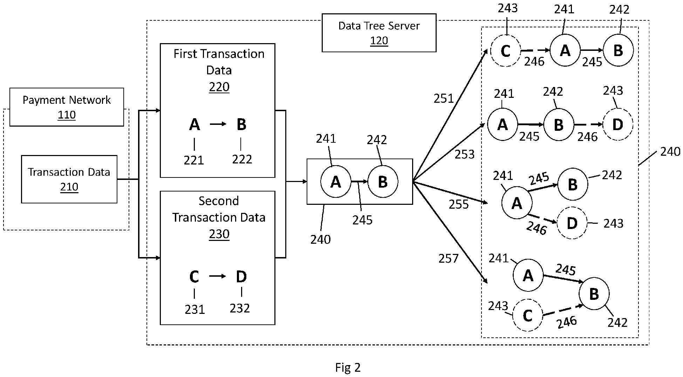

Figure 2 shows a schematic diagram of how a data tree for use with the threat detection algorithm 155 is built within the system of Figure 1. The data tree server 120 receives transaction data 210 relating to a plurality of transactions. Each transaction that occurs over the payment network 110 involves a source account in which funds are transferred from, and a destination account in which the funds relating to said transaction are transferred to. The source accounts and destination accounts are maintained by the entities 115 such as financial institutions. The source and destination accounts may be may be bank accounts, credit card accounts, cryptocurrency accounts, digital wallet accounts or any other type of account. The transaction data 210 includes details of a source and destination account involved in each of the plurality of transactions. The transaction data 210 further includes a time at which each of the transactions in the plurality of transactions occurred.

The details of each of the source accounts and each of the destination accounts involved in the plurality of transactions is an account identifier, otherwise referred to as an account ID. Each account ID relating to the source and destination accounts of the transactions is used by the payment network 110 and the data tree server 120 to identify the account associated with the account ID. Each account ID is unique to its corresponding source or destination account.

The account ID is also related to details of an owner of the corresponding account. The payment network provider further stores details of the owner, such as name, address, telephone number, account history, in relation to each account ID.

For the purpose of illustration, Figure 2 and the following description will be based on a single data tree 240 generated by the data tree server 120 from transaction data 210 relating to two transactions, a first transaction with first transaction data 220 and a second transaction with second transaction data 230. However, it is understood that any number of transactions may be processed by the payment network 110 and transaction data 210 relating to any number of transactions may be used by the data tree server 120 in order to generate any number of data trees.

The data tree server 120 receives the first transaction data 220 from the payment network 110. The first transaction data 220 includes details of a source account 221 (detonated as A in Figure 2) of the first transaction and details of a destination account 222 (denoted as B in Figure 2) of the first transaction. The data tree server 120 stores the details of the source account 221 and the details of the destination account 222 in the cache 130. The details of the source account 221 includes a first source account ID, and the details of the destination account 222 includes a first destination account ID. The details of the source account 221 and the destination account 222 of the first transaction 220 are stored in the cache 130 i.e., the first source account ID, and the first destination account ID are stored in the cache 130.

The data tree server 120 further generates a beginning of a data tree 240 that includes the first transaction data 220. The data tree 240 includes a first node 241 representing the details of the first transaction source account 221 and a second node 242 representing the details of the first transaction destination account 222. The data tree 240 also includes an edge 245 linking the source account 221 to the destination account 222 which represents the first transaction between the two accounts 221, 222.

The data tree 240 includes a number of nodes connected together by edges, where each node derives from an earlier node, expect for the first node in the data tree, known as a root node. A node deriving from another node is referred to as a child node, with the node in which it derives from being referred to as a parent node.

The data tree server 120 stores the data tree 240 in the tree database 140. The data tree server 120 assigns a data tree ID to the data tree 240 and stores the data tree ID in the database 240. The data tree server 120 further updates the cache 130 and stores the data tree ID with each of the first source account ID corresponding to the first transaction source account 221 and the first destination account ID corresponding to the first transaction destination account 222. In this way, the cache 130 stores the details corresponding to the source 221 and destination 222 account of the first transaction data 220, as well as the data tree ID corresponding to the data tree 240 in which they are stored in the database 140.

At a later point in time to receiving the first transaction data 220, the data tree server 120 receives the second transaction data 230 from the payment network 110. The later point in time to receiving the first transaction data 220 is any time after the first transaction data 220 is received, processed, and stored by the data tree server 120, as will be explained in detail below. The second transaction data 230 includes details of a source account 231 (denoted as C in Figure 2) of the second transaction and details of the destination account 232 (denoted as D in Figure 2) of the second transaction. The details of the source account 231 includes a second source account ID, and the details of the destination account 232 includes a second destination account ID.

The data source server 120 then determines if any of the source account 221 or the destination account 222 of the first transaction, is the same account as either of the source account 231 or destination account 232 of the second transaction, as will be described in further detail below. The data source server 120 determines whether either of the second source account ID of the second transaction or the second destination account ID of the second transaction is the same account ID as either of the first source account ID or first destination account ID, previously stored in the cache 130.

The data tree server 120 determines whether the destination account 232 of the second transaction is the same account as the source account 221 of the first transaction stored in the cache 130. If this is the case, the data tree server 120 retrieves, from the cache 130, the data tree ID stored in relation to the source account 221 of the first transaction.

The data tree server 120 then proceeds to add the second transaction data 230 into the data tree 240 which corresponds to the determined data tree ID. Given as the second transaction destination account 232 was determined to match the first transaction source account 221, the data tree server 120 stores the source account 231 (account C in Figure 2) in the data tree 240 before the first transaction data 220 already stored in the data tree 240. This is denoted as option 251 in Figure 2.

The source account 231 of the second transaction is stored in the data tree 240 as a third node 243. Because it has been determined that the destination account 232 of the second transaction is the same account as the source account 221 of the first transaction, the second transaction source account 231 is stored as the third node 243 in the data tree 240, as a parent node to the first node 241, where the first node 241 therefore becomes a child node deriving from the third node 243. A further edge 246 linking the third node 243 (i.e., the second transaction source account 231) and the first node 241 (i.e., the first transaction source account 221 which is the same as the second transaction destination account 232) is stored in the data tree 240 representing the second transaction (and therefore the second transaction data 230).

However, further options 253, 255, 257 of how the data retrieval server 120 stores the second transaction data 230 in the data tree 240 may occur instead of the option 251, depending on which of the source 231 or destination account 232 of the second transaction is determined to be the same as either of the source account 221 or destination account 222 of the first transaction.

The data tree server 120 determines whether the source account 231 of the second transaction is the same account as the destination account 222 of the first transaction stored in the cache 130. If this is the case, the data tree server 120 retrieves, from the cache 130, the data tree ID stored in relation to the destination account 222 of the first transaction (or the source account 221 of the first transaction as the data tree ID is the same for both given as they are stored in the same data tree 240).

The data tree server 120 then proceeds to add the second transaction data 230 into the data tree 240 which corresponds to the determined data tree ID. Given as the second transaction source account 231 was determined to match the first transaction destination account 222, the data tree server 120 stores the destination account 232 (account D in Figure 2) in the data tree 240 after the first transaction data 220 already stored in the data tree 240. This is denoted as option 253 in Figure 2.

The destination account 232 of the second transaction is stored in the data tree 240 as the third node 243. This is instead of the source account 231 being stored as the third node 243 in the first option 251. Because it has been determined that the source account 231 of the second transaction is the same account as the destination account 222 of the first transaction, the second transaction destination account 232 is stored as the third node 243 in the data tree 240, as a child node deriving from the second node 242, where the second node 242 therefore becomes a parent node to the third node 243. The edge 246 is therefore stored to link the third node 243 (i.e., the second transaction destination account 232) to the second node 242 (i.e., the first transaction destination account 222 which is the same as the second transaction source account 231), which represents the second transaction and the second transaction data 230.

The data tree server 120 further determines whether the source account 231 of the second transaction is the same account as the source account 221 of the first transaction stored in the cache 130. If this is the case, the data tree server 120 retrieves, from the cache 130, the data tree ID stored in relation to either the source account 221 of the first transaction or the destination account 222 of the first transaction (the data tree ID is the same for both given as they are stored in the same data tree 240).

The data tree server 120 then proceeds to add the second transaction data 230 into the data tree 240 which corresponds to the determined data tree ID. Given as the second transaction source account 231 was determined to match the first transaction source account 221, the data tree server 120 stores the destination account 232 (account D in Figure 2) in the data tree 240 deriving from the same source account 221 as the first transaction data 220 already stored in the data tree 240. This is denoted as option 255 in Figure 2.

The destination account 232 of the second transaction is stored in the data tree 240 as the third node 243. Because it has been determined that the source account 231 of the second transaction is the same account as the source account 221 of the first transaction, the second transaction destination account 232 is stored as the third node 243 in the data tree 240 as a child node deriving from the first node 241, where the first node 241 therefore becomes a parent node to the third node 243. The edge 246 is therefore stored to link the third node 243 (i.e., the second transaction destination account 232) to the first node 241 (i.e., the first transaction source account 221 which is the same as the second transaction source account 231). The edge 246 represents the second transaction and the second transaction data 230.

The data tree server 120 further determines whether the destination account 232 of the second transaction is the same account as the destination account 222 of the first transaction stored in the cache 130. If this is the case, the data tree server 120 retrieves, from the cache 130, the data tree ID stored in relation to either the source account 221 of the first transaction or the destination account 222 of the first transaction (the data tree ID is the same for both given as they are stored in the same data tree 240).

The data tree server 120 then proceeds to add the second transaction data 220 into the data tree 240 which corresponds to the determined data tree ID. Given as the second transaction destination account 232 was determined to match the first transaction destination account 222, the data tree server 120 stores the source account 231 (account C in Figure 2) in the data tree 240 as a parent account to the same destination account 222 as the first transaction data 220 already stored in the data tree 240. This is denoted as option 257 in Figure 2.

The source account 231 of the second transaction is stored in the data tree 240 as the third node 243. Because it has been determined that the destination account 232 of the second transaction is the same account as the destination account 222 of the first transaction, the second transaction source account 231 is stored as the third node 243 in the data tree 240 as a parent node to the second node 242, where the second node 242 therefore becomes a child node to the third node 243. The edge 246 is stored to link the third node 243 (i.e., the second transaction source account 231) to the second node 242 (i.e., the first transaction destination account 222 which is the same as the second transaction destination account 232). The edge 246 represents the second transaction and the second transaction data 230.

Therefore, it can be seen that the data tree server 120 generates and builds the data tree 240 by determining a sequence in which the first transaction and the second transaction occurred and stores the second transaction data 230 in relation to the first transaction data 220 already in the data tree 240 accordingly. Each of the above determinations which led to 251, 253, 255 and 257 may be carried out in any order, and once one of these conditions is satisfied the other determinations, in some instances, may not be carried out, as a node representing one of the accounts of the second transaction (i.e., node 243) will have already have been determined and added to the tree.

The data tree server 120 also uses a time of each transaction 120 to generate the data tree 240. The first transaction data 220 includes a time in which the first transaction occurred, and the second transaction data 230 includes a time in which the second transaction occurred. The data tree server 120 takes into account the time in which each of the transaction occurred, to further build the data tree 240 such that it represents the time ordering of the sequence of transactions.

Therefore, for option 251, the data tree server 120 only stores the source account 231 of the second transaction as the third, parent node 243 to the first node 241 (representing the first transaction source account 221), if the time of the second transaction is before the time of the first transaction and if the destination account 232 (denoted as D) matches the source account 221 (denoted as A).

In this way, the data tree server 102 receives first transaction data 220 before second transaction data 230, even though the second transaction occurred before the first transaction. However, the data tree server 120 determined that the second transaction occurred before the first transaction in a sequence, and thus stored in the source account 231 of the second transaction as a parent node 243 to the node 241 representing the source account 221 of the first transaction in the data tree 240. This allows the data tree server to process un-ordered transactions to build accurate complex data trees 240.

In regard to option 253, the data tree server 120 only stores the destination account 232 of the second transaction as the third, child node 243 to the second node 242 (representing the first transaction destination account 222), if the time of the second transaction is after the time of the first transaction, and if the source account 231 (denoted as C) matches the destination account 222 (denoted as B).

In all four options 251, 253, 255, 277 shown in Figure 2 of building the data tree 240, the data tree server 120 stores an account ID for each of the second transaction source account 231 and the second transaction destination account 232 in the cache 130. The data tree server 120 assigns and stores the data tree ID corresponding to the data tree 240 in the cache 130, in relation to the second transaction source account ID and the second transaction destination account ID. The data tree server 120 updates the data tree 240 stored in the database 240, to reflect the changes made to the data tree 240 (by adding the second transaction data 230 into the tree 240).

The cache 130 allows for quick access to the data that is stored in the cache 130. The cache 130 is configured to only store data for a predetermined amount of time, in order to avoid over filing the cache 130. The predetermined amount of time is referred to as the dwell time. Any data that is processed by the data tree server 120 and stored in the cache 130, will only be stored in the cache 130 for the predetermined amount of time. After the dwell time has passed, the data will be deleted from the cache 130.

As the first transaction data 220 is received from the payment network 110 and stored in the cache 130 by the data tree server 120, the first transaction data 220 will only remain in the cache 130 for a period of time equal to the dwell time. Therefore, as the second transaction data 230 is received, and the data tree server 120 searches the cache 130 for any matching source or destination account IDs, it will only determine that one of the second transaction account IDs matches one of the first transaction account IDs, if it is searching for the cache 130 within the dwell time of the first transaction data 220 stored in the cache 130.

The dwell time ensures that, firstly, the cache 130 remains small in comparison to the tree database 140, and secondly, that only relevant subsequent transactions received by the data tree server 120 (i.e., the second transaction data 230) are added to the data tree 240 including the first transaction data 220. Given as a second transaction that occurred too long after a first transaction will be considered no longer relevant to the data tree 240. The dwell time may be, for example, 24 hours, 48 hours, 72 hours or any other period of time set by the data tree server 120.

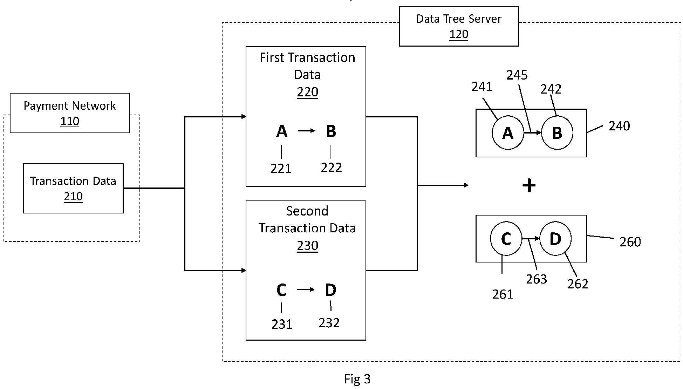

If one of the second transaction source account 231 or second transaction destination account 232 does match one of the first transaction accounts 221, 222 stored in the cache 130, but the dwell time for the first transaction accounts 221, 222 to be stored in the cache 130 has elapsed, the second transaction data 230 is used to generate a new data tree 260. In this case, the new data tree 260 is generated the same way as the new data tree 260 shown in Figure 3 and discussed in detail below.

The data tree server 120 determines whether none of the source account 221 or destination account 222 of the first transaction are the same as any of the source account 231 or destination account 232 of the second transaction. Figure 3 shows a schematic diagram of how a data tree for use with the threat detection algorithm 155 is built within the system 100 of Figure 1, as an alternative example to that shown in Figure 2 if it is determined that none of the source or destination accounts are the same.

If the data tree server 120 determines that the destination account 232 of the second transaction is not the same account as the source account 221 of the first transaction and if the source account 231 of the second transaction is not the same as the destination 222 account of the first transaction, the second transaction data 230 is stored in a new data tree 260.

The new data tree 260 includes a first node 261 corresponding to the source account 231 of the second transaction and a second node 262 corresponding to the destination account 232 the second transaction. An edge 263 is stored in the further data tree 260 which links the first node 261 to the second node 263 representing the second transaction data 230.

The new data tree 260 is stored in the tree database 140. A further data tree ID is generated and stored in the database with the data tree 260 itself, where the further data tree ID corresponds to the new data tree 260. The further data tree ID is assigned to each of the second transaction source 231 and destination 232 accounts. The source account ID of the second transaction, the destination account ID of the second transaction and the corresponding further data tree ID are all stored in the cache 130.

Therefore, as further transaction data is received by the data tree server 120, the further data is determined to match with either the first transaction data 220 in the data tree 240 or the second transaction data 230 in the further data tree 260.

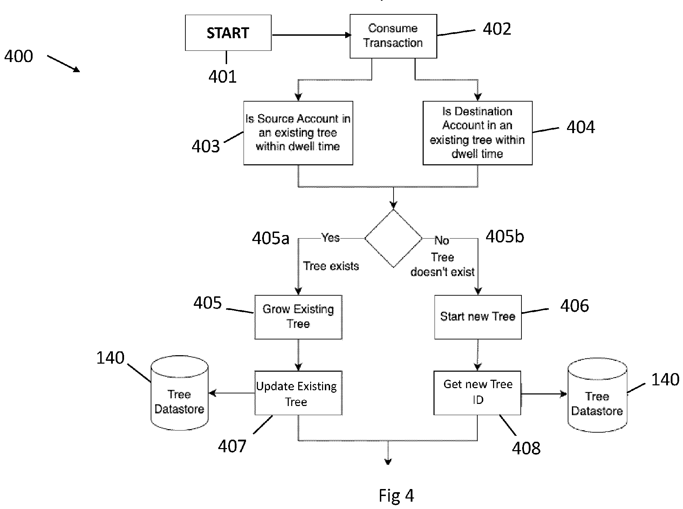

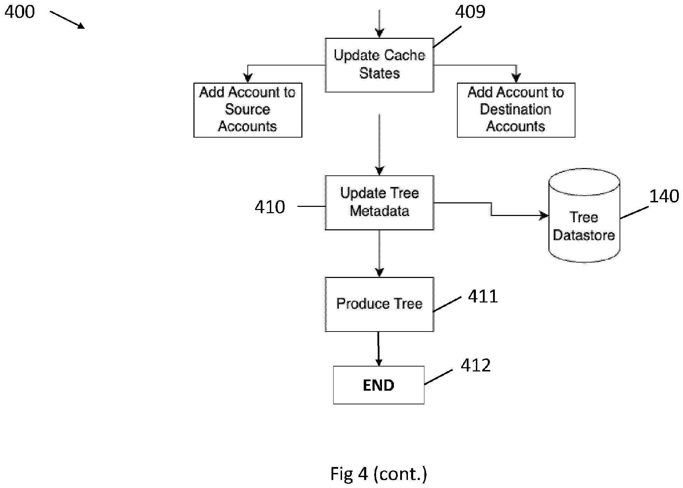

Figure 4 shows a method sequence diagram of generating the data tree 240 as shown in Figures 2 and 3, for use with a threat detection algorithm. The method 400 is performed by the data tree server 120. The method starts at step 401. At step 402, a transaction is consumed from the payment network 110. As discussed in relation to Figures 2 and 3, transaction data including details of the source and destination account of the transaction is received. In line with the example shown in Figures 2 and 3, at step 402 second transaction data 230 which includes details of the source account 231 (i.e., the second transaction source account ID) and details of the destination account 232 (i.e., the second transaction destination account ID) is received by the data tree server 120.

It is understood that the method 400 begins at step 401 after already receiving and processing first transactions data 220. Therefore, nodes corresponding to the first transaction source account 221 and the first transaction destination account 222 have already been stored in data tree 240, and the data tree ID corresponding to data tree 240 has been generated and stored, with the data tree 240 itself, in the tree database 140. The source account ID corresponding to the first transaction source account 221, the destination account ID corresponding to the first transaction destination account 222, and the data tree ID corresponding to the data tree 240 in which they are stored, are all stored in the cache 130.

At steps 403 and 404, it is determined whether the source account 231 of the second transaction or the destination account 232 of the second transaction is already stored by the data tree server 120 in the cache 130. At step 403, it is determined whether the received second transaction source account ID matches (i.e., is the same as) an account ID previously stored in the cache 130, such as those relating to the first transaction data 220. At step 404, it is determined whether the received second transaction destination account ID matches an account ID previously stored in the cache 130, such as those relating to the first transaction data 220.

As described above in relation to Figures 2 and 3, each received source account ID and destination account ID is stored in the cache 130 for a predetermined amount of time, the dwell time as referred to in Figure 4. Therefore, only if the first transaction account IDs have been stored in the cache 130 for less than the dwell time, will they be compared to the received second transaction source account ID and the received second transaction destination account ID in order to determine if any of the account IDs are the same.

If it is determined that either one of the second transaction source account ID or the received second transaction destination account ID is the same as the previously stored first transaction source account ID or first transaction destination account ID, at step 405, a node is added to the previously stored data tree 240 that corresponds to one of the accounts 231, 232 of the second transaction data 230. The data tree 240 is grown by including the second transaction data 230 into the data tree 240, as discussed in detail above and shown Figure 2. Step 405 also includes determining the data tree ID corresponding to the data tree 240, before adding the further node into the data tree 240 corresponding to the second transaction data 230. At step 407, the data tree 240 now including the second transaction data 230 is updated in the tree database 140 (labelled as tree datastore 140 in Figure 4).

Alternatively, if it is determined that none of the second transaction source account ID or the received second transaction destination account ID is the same as the previously stored first transaction source account ID or first transaction destination account ID, or the dwell time has passed, at step 406, a new data tree 260 is generated with the second transaction data 230 as discussed in detail above and shown in Figure 3. At step 408 a further data tree ID is generated corresponding to the new data tree 260. Step 408 also includes storing the new data tree 260 and the data tree ID corresponding to the new data tree 260 in the tree database 140.

At step 409, the cache 130 is updated. The received second transaction source account ID and the received second transaction destination account ID are stored in the cache 130. A data tree ID is stored with the account ID's, depending on whether the second transaction data 230 was added to the previously stored data tree 240 or whether the new data tree 260 was generated. If the second transaction data 230 was added to the data tree 240, the data tree ID corresponding to the data tree 240 is stored with the second transaction source account ID and the second transaction destination account ID in the cache 130. If the new data tree 260 was generated with second transaction data 230, the new generated data tree ID corresponding to the new data tree 260 is stored with the second transaction source account ID and the second transaction destination account ID in the cache 130.

The data tree (either the updated data tree 240 or the new data tree 260) stored in the tree database 140 further includes metadata. At step 410, the metadata is stored in the tree database 140 with its corresponding data tree 240,260. The metadata includes a size of the updated data tree 240 or the new data tree 260, which is an indication of a number of transactions present in the data tree 240, 260, and the time in which the data tree 240, 260 was started i.e., a time in which the first transaction was stored in the data tree 240, 260. The metadata may further include the corresponding data tree ID. The metadata is stored and updated with the corresponding data tree 240, 260 in the tree database 140.

At step 411, the data tree 240, 260 is produced and sent to the threat detection server 150, such that it is used with the threat detection algorithm 155, as shown in Figure 1. The data tree, either an updated data tree 240, a new data tree 260 or both an updated data tree 240 and a new data tree 260, is used to provide an input of data into the threat detection algorithm 155. The method 400 ends at step 412.

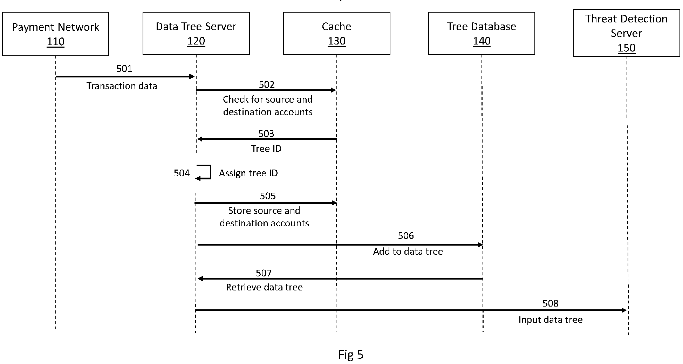

Figure 5 shows a message flow diagram between the entities of the system shown in Figure 1 when generating a data tree for use with a threat detection algorithm as shown in Figures 2 to 4. Similar to the method 400 shown in Figure 4, the message flow diagram of Figure 5 begins after already receiving, processing, and storing in the data tree 240, the first transaction data 220, as described in relation to Figures 2 and 3.

Figure 5 shows a message flow diagram that corresponds to Figure 2, the scenario in which later received source or account data from a transaction matches account data that has already been stored in a data tree. Figure 5 shows the same method as option 405a of method 400, but further shows the entities of the system 100 which perform each step.

At step 501, the data tree server 120 receives transaction data from the payment network 110. For illustrative purposes the message flow diagram of Figure 5 will be described in relation to previously processed first transaction data 220 and newly received second transaction data 230 as shown in Figure 2. The second transaction data 230 includes the source account ID corresponding to the source account 231 of the second transaction and the destination account ID corresponding to the destination account 232 of the second transaction.

At step 502, the data tree server 120 checks the cache 130 to determine if the second transaction source account ID or if the second transaction destination account ID is the same as any of the previously stored account IDs, i.e., the first transaction source account ID or the first transaction destination account ID. The data tree server 120 determines that the data tree 240 includes either a corresponding source or destination account to the source account 231 or the destination account 232 of the second transaction.

At step 503, the data tree server 120 determines the data tree ID associated with the data tree 240. At step 504, the data tree server assigns the data tree ID corresponding to data tree 240 to the second transaction source account ID and second transaction destination account ID.

At step 505, the data tree server 120 stores the second transaction source account ID and the second transaction destination account ID in the cache 130. Step 505 further includes the data tree server 120 storing the assigned data tree ID with the second transaction source account ID and the second transaction destination account ID in the cache 130.

At step 506, the data tree server adds the second transaction data 230 to the data tree 240 (that was determined at step 502) and updates the data tree 240 stored in the tree database 140. The second transaction data 230 is added to the data tree 240 as described above and shown in Figure 2. The way in which the second transaction data 230 is added to the data tree 240 depends on which of the second transaction source or destination accounts match which of the first transaction source or destination accounts already in the data tree 240.

At step 507, the data tree server 120 retrieves the data tree 240 from the tree database 140. This may be instantly after step 506, or it may be at a later point in time when data from the data tree 240 is required by the data tree server 120 and the threat detection server 150 for input into the threat detection algorithm 155.

At step 508, data from the retrieved data tree 240 is sent to the threat detection server 150 for input into the threat detection model 155. To input the transaction data within the data tree 240 into the threat detection algorithm 155, features are extracted from the data tree 240. A list of features of the data tree 240 is generated by the threat detection server 150. The list of data tree 240 features captures characteristics of the transaction that have occurred between the network of different source and destination accounts in the data tree 240.

The list of features is converted into a set of vectors by the threat detection server 150. The threat detection server 150 then inputs the plurality of vectors into the threat detection model 155, such that the threat detection model outputs predictions based on the input vectors. The threat detection server 150 further utilises additional data received from the payment network 110 and processed by the data tree server 120 pertaining to the accounts involved in the transactions of the data tree 240, such as account history information.

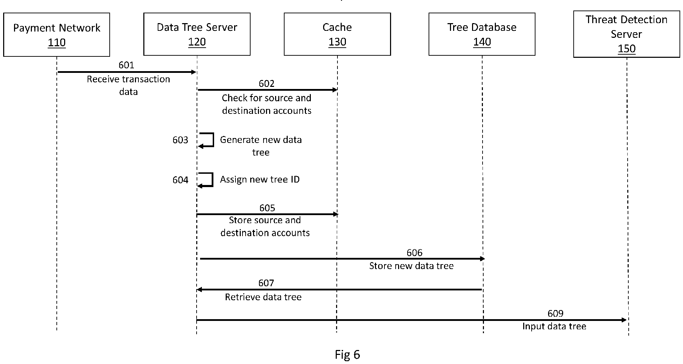

Figure 6 shows a message flow diagram between the entities of the system shown in Figure 1 when generating a data tree for use with a threat detection algorithm as shown in Figures 2 to 4. Similar to the method 400 shown in Figure 4, the message flow diagram of Figure 6 begins after already receiving, processing and storing in the data tree 240, the first transaction data 220, as described in relation to Figures 2 and 3. The message flow diagram is an alternative to the message flow diagram shown in Figure 5 and as described above.

Figure 6 shows a message flow diagram that corresponds to Figure 3, the scenario in which later received source or account data from a transaction does not match any account data that has already been stored in a data tree. Figure 6 shows the same method as option 405b of method 400, but further shows the entities of the system 100 which perform each step.

At step 601, the data tree server 120 receives transaction data from the payment network 110. For illustrative purposes the message flow diagram of Figure 6 will be described in relation to previously processed first transaction data 220 and newly received second transaction data 230 as shown in Figure 3. The second transaction data 230 includes the source account ID corresponding to the source account 231 of the second transaction and the destination account ID corresponding to the destination account 232 of the second transaction.

At step 602, the data tree server 120 checks the cache 130 to determine if the second transaction source account ID or if the second transaction destination account ID is the same as any of the previously stored account IDs, i.e., the first transaction source account ID or the first transaction destination account ID. The data tree server 120 determines that the data tree 240 does not include either a corresponding source or destination account to the source account 231 or the destination account 232 of the second transaction.

At step 603, the data tree server 120 generates the new data tree 260. The data tree server 120 begins the new data tree 260 by storing a node corresponding to the second transaction source account ID and a further node corresponding to the second transaction destination account ID, where the nodes are linked by an edge representing the second transaction.

At step 604, the data tree server 120 generates a new data tree ID corresponding to the new data tree 260. The data tree server 120 assigns the new data tree ID to the second transaction source account ID and second transaction destination account ID, and to the data tree 260 itself.

At step 605, the data tree server 120 stores the second transaction source account ID and the second transaction destination account ID in the cache 130. Step 605 further includes the data tree server 120 storing the assigned new data tree ID with the second transaction source account ID and the second transaction destination account ID in the cache 130. At step 606, the data tree server 120 stores the new data tree 260, and its corresponding data tree ID, in the tree database 140.

At step 607, the data tree server 120 retrieves the data tree 260 from the tree database 140. This may be instantly after step 606, or it may be at a later point in time when data from the data tree 260 is required by the data tree server 120 and the threat detection server 150 for input into the threat detection algorithm 155. Step 607 may also additionally include retrieving the data tree 240 containing first transaction data 220 that was already stored in the tree database 140.

At step 609, data from the retrieved data tree 260, and optionally data tree 240, is sent to the threat detection server for input into the threat detection model 155. To input the transaction data within the data tree(s) 240, 260 into the threat detection algorithm 155, features are extracted from each of the data trees 240, 260. A list of features of each data tree 240, 260 is generated by the threat detection server 150. The list of data tree 240, 260 features captures characteristics of the transaction that have occurred between the network of different source and destination accounts.

The list of features is converted into a set of vectors by the threat detection server 150. The threat detection server 150 then inputs the plurality of vectors into the threat detection model 155, such that the threat detection model outputs predictions based on the input vectors. The threat detection server 150 further utilises additional data received from the payment network 110 and processed by the data tree server 120 pertaining to the accounts involved in the transactions of the data tree 260, and additionally the data tree 240, such as account history information.

It is to be understood that the one or more data trees 240, 260 generated as discussed above and shown in Figures 2 to 6 may be used with any type of threat detection algorithm. The threat detection algorithm 155 is a money laundering algorithm that is input with a plurality of vectors representing the features of the data trees 240, 260 that have been generated according to the above methods and systems. However, any type of data may be derived from the generated data trees 240, 260 and input into the threat detection algorithm 155, which may be an algorithm configured to detect any type of threat in the payment network 110.

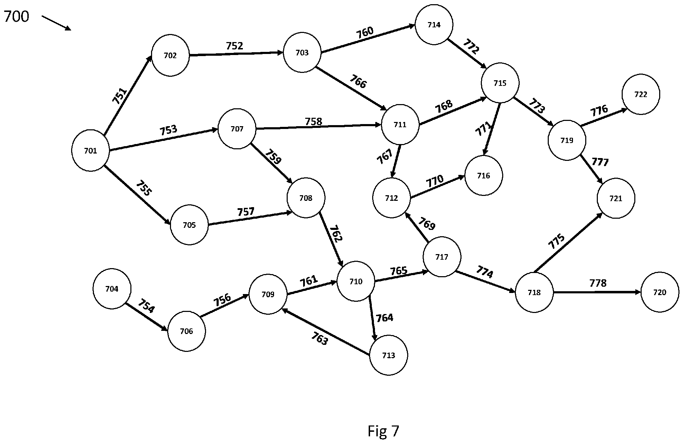

Figure 7 shows an example of data tree 700 generated by data tree server 120 with transaction data 210 received from the payment network 110 as described above in Figures 2 to 6. The data tree 700 may be an example of data tree 240, after transaction data 210 representing a plurality of more transactions is received by the data tree server 120. Any number of transactions may be processed by the data tree server 120, and therefore the generated data tree 240 is not limited to the nodes 241, 242, 243 and edges 245, 246 shown in Figure 2, nor is the generated data tree 260 shown in Figure 3 limited to the nodes 261, 262 and edge 263.

The data tree 700 includes nodes 701-722 linked together in a network of transactions by edges 751-778. Each of the nodes 701-722 stored in the data tree 700 represents details of an account used in a transaction across the payment network 110. Each of the nodes 751-778 represents a transaction that has occurred between two of the accounts 701-722. For example, the node 707 is linked by the edge 758 to node 711. This represents transaction data that was received by the data tree server, where a source account associated with node 707 transferred funds to a destination account associated with node 711.

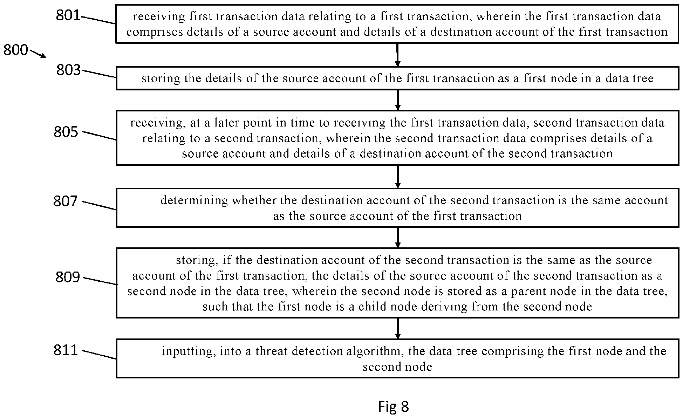

Figure 8 shows a flow diagram of a computer implemented method 800 for generating a data tree for use with a threat detection algorithm configured to detect threats in a payment network.

At step 801 the method involves, receiving first transaction data relating to a first transaction, wherein the first transaction data comprises details of a source account and details of a destination account of the first transaction.

At step 803 the method involves, storing the details of the source account of the first transaction as a first node in a data tree.

At step 805 the method involves, receiving, at a later point in time to receiving the first transaction data, second transaction data relating to a second transaction, wherein the second transaction data comprises details of a source account and details of a destination account of the second transaction.

At step 807 the method involves, determining whether the destination account of the second transaction is the same account as the source account of the first transaction.

At step 789 the method involves, storing, if the destination account of the second transaction is the same as the source account of the first transaction, the details of the source account of the second transaction as a second node in the data tree, wherein the second node is stored as a parent node in the data tree, such that the first node is a child node deriving from the second node.

At step 811 the method involves, inputting, into a threat detection algorithm, the data tree comprising the first node and the second node.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

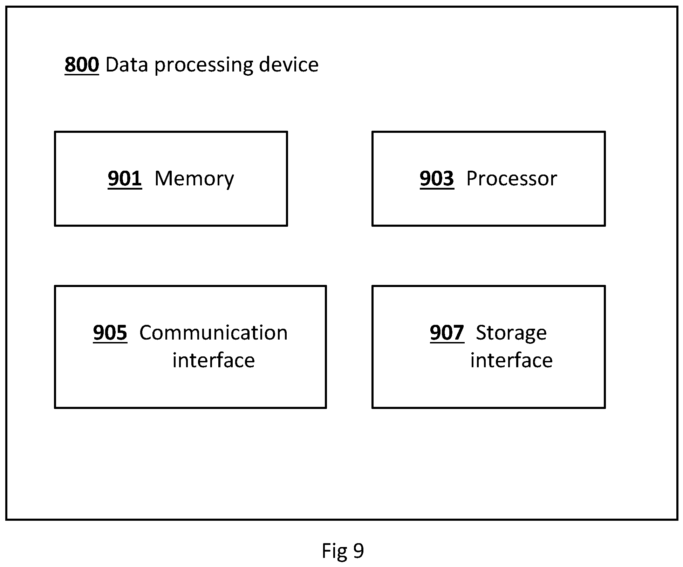

Similarly, any steps of any of the methods described herein may be performed by data processing devices. By way of example, Figure 9 shows, in schematic form, a data processing device 900 that is suitable for performing the functions of the servers of the payment network the data tree server, the threat detection server, or any other entity. The data processing device 900 may automatically perform any of the methods described herein.

Data processing device 900 includes a processor 903 for executing instructions. Instructions may be stored in a memory 901. Processor 903 may include one or more processing units (e.g., in a multi-core configuration) for executing instructions. The instructions may be executed within a variety of different operating systems on the data processing device 900, such as UNIX, LINUX, Microsoft Windows^{®}, etc. More specifically, the instructions may cause various data manipulations on data stored in memory 901 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 903 is operatively coupled to a communication interface 905 such that data processing device 900 can communicate with a remote device, such as another data processing device of the system. For example, communication interface 905 may receive communications from another member of the system.

Processor 903 may also be communicatively coupled to a storage device such as a database, depending on the function of data processing device 900 within the context of the system. The storage device is any computer-operated hardware suitable for storing and/or retrieving data, where in the case of a secure storage medium the data is stored and retrieved securely.

The storage database may, for example, include the cache 130 or the tree database 140, and it can be external to data processing device 900 and located remotely. Alternatively, it can be integrated in data processing device 900. For example, data processing device 900 may include memory 901 as one or more hard disk drives acting as a storage database. Alternatively, where the storage database is external to data processing device 900, it can comprise multiple storage units such as hard disks or solid-state disks in a redundant array of inexpensive disks (RAID) configuration. The storage database may include a storage area network (SAN) and/or a network attached storage (NAS) system. In some arrangements, the system and methods may be deployed in a cloud-based environment.

Processor 903 can be operatively coupled to the storage device (storage database) via a storage interface 907. Storage interface 907 is any component capable of providing processor 903 with access to the storage device. Storage interface 907 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 803 with access to the storage device.

Memory 901 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media/medium" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media/medium" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above-described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

While the disclosure has been described in terms of various embodiments, the person skilled in the art will recognise that the disclosure can be practiced with modification within the spirit and scope of the claims.

Although it is described that the data tree server 120 and the threat detection server 150 are maintained by the same payment network provider that maintains the payment network 110, in other arrangements the data tree server 120 and the threat detection server 150 may be maintained by a different entity to the payment network 110 and may be maintained by separate entities to one another. In this alternative arrangement, the data tree server 120 and the threat detection server 150 have been given access to receive the transaction data 220, 230 obtained by the payment network provider from the payment network 110.

Although it is shown in Figure 1 that the threat detection server 150 is only in communication with the data tree server 120, in other arrangements the threat detection server 150 may be in direct communication with the payment network 110 as well as the data tree server 120.

The threat detection algorithm 155 is a money laundering algorithm. However, the data tree 240, 260 may be used with any type of threat detection algorithm, such as a fraud detection algorithm or a network security threat detection algorithm.

As described above, and shown in Figures 2 and 3, the transaction data 210 comprises first transaction data 220 relating to the first transaction and second transaction data 230 relating to the second transaction. However, the data tree server 120 may receive data relating to any number of transactions, such that the data tree 240, 260 are built based on the plurality for transactions that are received by the data tree server 120.

It is also understood that the first transaction data 220 and the second transaction data 230 are only labelled as such for clarity purposes. The terms "first" and "second" do not necessarily denote the order in which the transaction data is received by the data tree server 120 and are purely prefixes to aid in clarity in this discussion.

Although it is shown that the data tree 240 comprise nodes 241, 242, 243 and edges 245, 246. In the case where more transaction data 210 is received from the payment network 110, the number of nodes and edges in the data tree 240 would be increased.

As described and shown in Figure 2, data tree server 120 first stores the source 221 and destination accounts 222 of the first transaction as the first node 241 and the second node 242 respectively. However, in other arrangements the data tree server 120 may first store the source account 221 of the first transaction in the data tree 240 as the first node 241 and determine if the destination account 232 of the second transaction is the same as this source account 221 of the first transaction, and then store the source account 231 of the second transaction as a second node 243, before storing a node presenting the destination account 222 of the first transaction. The term first, second and third nodes are not used to denote the order in which the nodes are stored in the data tree 240 and are purely used to aid with clarity as to which nodes represent which accounts.

Although it is described that method 400 shown in Figure 4, as well as the message flows of Figures 5 and 6, involve the second transaction data 230 and begin after already receiving first transaction data 220, the above method and message flows may be performed with any transaction data 210 received by the payment network 110 and is not limited to the transaction data 210 comprising the first transaction data 220 and the second transaction data 230.

Although it is described above in relation to Figures 5 and 6 that the list of features extracted from the produced data tree 240, 260 is generated by the threat detection server 150 for input into the threat detection algorithm 155, in other arrangements the data tree server 120 may generate the list of features of the data tree 240, 260 and send this data to the threat detection server 150 to input into the threat detection algorithm.

Although the method steps and messages sent in Figures 4, 5 and 6 are shown in a specific order, the steps may be in any order. This is provided that the transaction data 210 is received first, that each storing step of data e.g., the data tree 240 or the data tree occurs after said data has been determined or generated, and that the method and sequence ends with inputting the generated data trees 240, 260 into the threat detection algorithm 155.

## Claims

1. A computer implemented method of generating a data tree for use with a threat detection algorithm configured to detect threats in a payment network, the method comprising:
receiving first transaction data relating to a first transaction, wherein the first transaction data comprises details of a source account and details of a destination account of the first transaction;
storing the details of the source account of the first transaction as a first node in a data tree;
receiving, at a later point in time to receiving the first transaction data, second transaction data relating to a second transaction, wherein the second transaction data comprises details of a source account and details of a destination account of the second transaction;
determining whether the destination account of the second transaction is the same account as the source account of the first transaction;
storing, if the destination account of the second transaction is the same as the source account of the first transaction, the details of the source account of the second transaction as a second node in the data tree, wherein the second node is stored as a parent node in the data tree, such that the first node is a child node deriving from the second node; and
inputting, into a threat detection algorithm, the data tree comprising the first node and the second node.

2. The computer implemented method according to claim 1, wherein the data tree comprises an edge connecting the second node to the first node, the edge representing the second transaction.

3. The computer implemented method according to claim 1 or claim 2, wherein the first transaction data further comprises data indicating a time that the first transaction occurred, wherein the transaction data of the second transaction further comprises data indicating a time that the second transaction occurred, and wherein the method further comprises:
determining, whether the time of the first transaction is before the time of the second transaction; and
wherein the step of storing the details of the source account of the second transaction as the second node in the data tree wherein the second node is stored as the parent node in the data tree such that the first node is the child node deriving from the second node is carried out only if: the destination account of the second transaction is the same as the source account of the first transaction and if the time of the second transaction is before the time of the first transaction.

4. The computer implemented method according to any preceding claim, the method further comprising:
storing the details of the destination account of the first transaction as a third node in the data tree, wherein the third node is stored as a child node deriving from the first node in the data tree, such that the first node is a parent node to the third node.

5. The computer implemented method according to claim 4, wherein the data tree comprises an edge connecting the first node to the third node, the edge connecting the first node to the third node representing the first transaction.

6. The computer implemented method according to claim 4 or claim 5, the method further comprising:
determining whether the source account of the second transaction is the same account as the destination account of the first transaction; and
storing, if the source account of the second transaction is the same as the destination account of the first transaction, the details of the destination account of the second transaction as a second node in the data tree, wherein the second node is stored as a child node deriving from the third node in the data tree, such that the third node is a parent node to the second node.

7. The computer implemented method according to claim 6, wherein the first transaction data further comprises data indicating a time that the first transaction occurred, wherein the transaction data of the second transaction further comprises data indicating a time that the second transaction occurred, and wherein the method further comprises:
determining, whether the time of the first transaction is after the time of the second transaction; and
wherein the step of storing the details of the destination account of the second transaction as the second node in the data tree wherein the second node is stored as the child node deriving from the third node in the data tree such that the third node is a parent node to the second node is carried out only if the source account of the second transaction is the same as the destination account of the first transaction and if the time of the second transaction is after the time of the first transaction.

8. The computer implemented method according to any preceding claim, the method further comprising:
determining whether the source account of the second transaction is the same account as the destination account of the first transaction; and
storing, if the destination account of the second transaction is not the same account as the source account of the first transaction and if the source account of the second transaction is not the same as the destination account of the first transaction, the details of the source account of the second transaction as a first node in a further data tree and the details of the destination account of the second transaction as a second node deriving from the first node in the further data tree.

9. The computer implemented method according to any preceding claim, wherein the first transaction data comprises a source account ID corresponding to the details of the source account of the first transaction, the second transaction data comprises a destination account ID corresponding to the details of the destination account of the second transaction, and wherein determining whether the destination account of the second transaction is the same account as the source account of the first transaction comprises determining whether the destination account ID of the second transaction is the same as the source account ID of the first transaction.

10. The computer implemented method according to any preceding claim, wherein the method further comprises:
storing a data tree ID corresponding to the data tree;
assigning the data tree ID to the details of the source account and the details of the destination account of the first transaction data; and
determining, if the destination account of the second transaction is the same as the source account of the first transaction, the data tree ID assigned to the source account of the first transaction; and
storing, the source account of the second transaction as the second node in the data tree assigned with the data tree ID.

11. The computer implemented method according to any preceding claim, wherein the first transaction data and the second transaction data are stored in a cache.

12. The computer implemented method according to any preceding claim, wherein the first transaction data is stored for a predetermined period of time, and wherein storing, if the destination account of the second transaction is the same as the source account of the first transaction, the details of the source account of the second transaction as a second node in the data tree, is only carried out if the second transaction data is received within the predetermined period of time.

13. The computer implemented method according to any preceding claim, the method further comprising:
detecting a threat using the threat detection algorithm after the data tree has bene input into the threat detection algorithm.

14. A system of generating a data tree for use with a threat detection algorithm configured to detect threats in a payment network, the system configured to perform the method steps of any of claims 1 to 13.

15. A non-transitory computer-readable medium comprising instructions which, when executed by a computer, cause the computer to carry out the method steps of any claim 1 to 14.
